(19) Europäisches Patentamt
European Patent Office
Office européen des brevets

(11) EP 1 265 041 B1

(12) # EUROPEAN PATENT SPECIFICATION

(45) Date of publication and mention of the grant of the patent:
**21.06.2006 Bulletin 2006/25**

(51) Int Cl.:
*F25B 1/00* (2006.01) *F25B 41/06* (2006.01)
*F25B 40/00* (2006.01)

(21) Application number: **02012723.9**

(22) Date of filing: **07.06.2002**

(54) **Refrigerating cycle**

Kältekreislauf

Cycle frigorifique

(84) Designated Contracting States:
**DE ES FR GB IT**

(30) Priority: **07.06.2001 JP 2001172505**

(43) Date of publication of application:
**11.12.2002 Bulletin 2002/50**

(73) Proprietor: **TGK CO., Ltd.**
**Tokyo 193-0942 (JP)**

(72) Inventors:
- **Hirota, Hisatoshi, c/oTGK Co., Ltd. Hachioji-shi, Tokyo 193-0942 (JP)**
- **Tsugawa, Tokumi, c/oTGK Co., Ltd. Hachioji-shi, Tokyo 193-0942 (JP)**

(74) Representative: **Grünecker, Kinkeldey, Stockmair & Schwanhäusser Anwaltssozietät Maximilianstrasse 58 80538 München (DE)**

(56) References cited:
**EP-A- 1 059 495**
**EP-A- 1 069 385**
**EP-A- 1 098 091**
**WO-A-01/27543**
**FR-A- 2 738 331**
**FR-A- 2 780 143**
**US-A- 4 517 811**

- **PATENT ABSTRACTS OF JAPAN vol. 1997, no. 12, 25 December 1997 (1997-12-25) & JP 09 222268 A (TGK CO LTD), 26 August 1997 (1997-08-26)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The invention relates to a refrigerating cycle according to the preamble part of claim 1.

Known refrigerating cycles (EP-A-106 385; JP-A-09222268), e.g. for automotive air-conditioners, are operated under adverse service conditions. The compressor conventionally is driven by an engine the rotational speed of which permanently may change. The refrigerating cycle is configured to be properly serviceable even under such conditions and has to adiabatically compress a gaseous refrigerant compressed by the compressor, to condense the high temperature and high pressure compressed refrigerant in the condenser, to separate the condensed refrigerant into a gaseous refrigerant phase and a liquid refrigerant phase in the receiver, to adiabatically expand the separated liquid refrigerant phase by the thermal expansion valve to produce a low temperature and low pressure refrigerant, and to allow this refrigerant to be evaporated in the evaporator, before it returns to the compressor. Conventional refrigerating cycles allow to unleash maximum cooling power when the compressor is driven, e.g. with constant rotational speed. Although an operation providing the maximum cooling power is necessary only under limited conditions, e.g. when the automotive air-condition is started, it also would be preferable to save energy by providing a required refrigerating capability with a minimum power input, i.e. with an excellent coefficient of performance, e.g. when the air-conditioner operates in a steady operating condition.

The refrigerating cycle known from FR 27 80 143 A contains a purely pressure depending control valve between the condenser and the receiver. A bellows containing a reference fluid is actuated by the outlet pressure of the condenser such that increasing outlet pressure of the condenser increases the opening degree of the valve.

The refrigerating cycle known from US 4,517,811 A contains an aperture of fixed cross-section between the condenser and the receiver. The higher the condenser outlet pressure is the larger the pressure drop across the aperture will be.

The refrigerating cycle known from FR 27 38 331 A contains a floatation valve between the condenser and the receiver for reducing the condenser outlet pressure.

The refrigerating cycle known from EP 10 59 495 A controls a pressure reducing pressure control valve between a gas cooler and the receiver and the evaporator. The pressure control valve is controlled by the temperature at out the outlet of the gas cooler.

Further prior art is contained in EP 10 98 091 A and WO 01/27543 A.

It is an object of the invention to provide a refrigerating cycle of the kind as mentioned above which is capable of performing both an operation during which the maximum cooling power can be unleashed and an operation during which the most excellent coefficient of performance is attained.

Said object is achieved by the features of claim 1.

By setting the pressure reduction controlled and regulated by the pressure reducing device substantially to zero, the refrigerating cycle will perform an operation in which maximum cooling power is unleashed. By setting the pressure reduction to a desired value different from zero an operation will be performed for which an excellent performance coefficient is attained. This enables the refrigerating cycle to selectively perform both the operation with the maximum cooling power and the operation with the excellent performance coefficient, e.g. by varying the enthalpy difference across the evaporator. When there is demand for maximum cooling power the refrigerant can be controlled at the outlet of the condenser such that condensation will be completed without supercooling. This can be achieved by setting the pressure reducing device such that the upstream and downstream pressures remain essentially equal, resulting in a decreased enthalpy difference across the evaporation. To the contrary, if a stable operation condition of the refrigerating cycle has been reached and the refrigeration load has decreased, the enthalpy difference across the evaporator is expanded by reducing the downstream pressure in relation to the upstream pressure. This results in an increase of the performance coefficient of the refrigeration cycle and a reduction of the power necessary to reach the required cooling power.

Preferred embodiments are contained in the depending claims.

Embodiments of the invention will be described with reference to the drawing. In the drawing is:

- Fig. 1 a block diagram of a refrigerating cycle,
- Fig. 2 a Mollier chart representing the operation of the refrigerating cycle,
- Fig. 3 a cross-sectional view of the differential pressure regulating valve,
- Fig. 4 a valve characteristics diagram of the differential pressure regulating valve shown in Fig. 3,
- Fig. 5 a cross-sectional view of a second example of a differential pressure regulating valve,
- Fig. 6 a valve characteristics diagram of the differential pressure regulating valve shown in Fig. 5, and
- Fig. 7 a block diagram of another refrigerating cycle.

A refrigerating cycle in Fig. 1 comprises a compressor 1 driven by a not shown engine and connected to condenser 2. The condenser outlet is connected via a settable pressure reducing device 3 to a receiver 4 for carrying out gas/liquid separation. The receiver outlet is connected to a high pressure inlet of a thermal expansion valve constituting an expansion device 5. The thermal expansion valve 5 in turn is connected to an evaporator 6. The evaporator outlet is connected via a passage of the thermal expansion valve 5 to a suction port of the compressor 1. The thermal expansion valve 5 senses at least the temperature of the refrigerant at the outlet of the evaporator 6.

The operation of the refrigerating cycle of Fig. 1 will be described with reference to Fig. 2. In Fig. 2, the ordinate represents pressure, while the abscissa represents enthalpy.

The compressor 1 compresses gaseous refrigerant and increases the pressure to point A in Fig. 2. The high temperature and high pressure refrigerant is cooled by the condenser 2 to be thereby brought to the state of point B. The cooled refrigerant passes through the pressure reducing device 3 where the pressure is reduced by a predetermined differential pressure, and enters the receiver 4 (point C). At this time point C lies on a saturated liquid curve K. A liquid refrigerant phase obtained by gas/liquid separation in the receiver 4 is guided into the thermal expansion valve 5, where it is adiabatically expanded to point D. The refrigerant turned by the adiabatic expansion into a low temperature and a low pressure condition is then eliquidated by the evaporator 6 to point E. At this time, the thermal expansion valve 5 senses the temperature and pressure of the refrigerant flowing out from evaporator 6 and controls the flow rate of the refrigerant such that the status of the refrigerant crosses over the saturated liquid curve K to have a predetermined degree of super heat. The refrigerant then enters the compressor 1 which performs a transition from point E to point A.

The pressure reducing device 3 is constituted by a differential pressure regulating valve 10 or 30 (Figs 3 or 5) and controls the pressure of the refrigerant such that the differential pressure between the points B and C is constant. This differential pressure can be changed from approximately zero to a desired value or amount by an externally generated electric signal. Point C of the liquid refrigerant collected in the receiver 4 is moved along the saturated liquid curve K when the differential pressure is changed. More specifically, point C is moved upward or downward along the saturated liquid curve K, and consequently point D is moved in a left/right direction in Fig. 2, so that the enthalpy difference across evaporator 6 can be varied.

If maximum cooling power is to be unleashed (e.g. an operation with a very high load on the refrigerating cycle), the differential pressure is set to approximately zero. The state of point C equal the state of point B, so that refrigerant at the condenser outlet is controlled to a state where condensation has been completed without supercooling. The refrigerant is supplied to the thermal expansion valve 5 via the receiver 4. The refrigerant is thus controlled to the optimum state at the outlet of the condenser 2. Maximum cooling power can be unleashed.

When the automotive air-conditioner is in a stable operating condition, e.g. after the temperature within the passenger compartment has been controlled to be close to a preset temperature, and hence the load on the refrigerating cycle has become small, the differential pressure regulated by the differential pressure regulating valve is set to a value larger than zero. This measure expands the enthalpy difference (hE - hD) across the evaporator 6 to increase the performance coefficient COP of the refrigerating cycle. More specifically, the coefficient of the performance COP is represented by:

$$COP = (hE - hD) / (hA - hE)$$

The performance coefficient COP is improved as the numerator of the equation is increased. With the improved performance coefficient a required cooling power can obtained with a lower power input. This reduces the load for the engine such that an energy saving operation can be expected.

The valve characteristics diagram of Fig. 4 belongs the differential pressure regulating valve 10 of Fig. 3. Fig. 4 shows changes of the differential pressure relative to the value of a current exciting a solenoid of the differential pressure regulating valve 10.

The differential pressure regulating valve 10 in Fig. 3 comprises a body 11 including an inlet 12 and an outlet 13, a valve seat 14 integrally formed in body 11 at an intermediate portion of a refrigerant passage communicating inlet 12 and outlet 13, and a valve element 15 arranged at a downstream side of valve seat 14. The valve element 15 is held by a valve urging member 16 to prevent that the valve element 15 is dislocated in case of high refrigerant flow rates. The valve urging member 16 is formed like a piston which is axially slidably inserted into a cylinder of body 11. A communication bore 17 ensure uniform pressures in all downstream portions of the valve.

The valve urging member 16 is driven by a solenoid 18 arranged on the body 11. The solenoid 18 can be actuated by an externally generated electrical signal either between on and off states only (black/white solenoid) or proportionally to the exciting current value (proportional solenoid). (A black/white solenoid allows two steps of pressure reduction, while a proportional solenoid allows a continuous variation of the pressure reduction). In the embodiment shown, a proportional solenoid 18 is used, however.

The solenoid 18 includes a sleeve 19 receiving a axially moveable core 20 and a fixed core 21 blocking the opening at the upper end of sleeve 19. An axially moveable shaft 22 extends through the moveable core 20 and is slidably guided by a bearing 23 and by a recessed portion in the fixed core 21. A spring 24 is inserted between the moveable core 20 and the fixed core 21 for urging the valve element 15 in the valve closing direction towards valve seat 14. Outside sleeve 19 a magnetic coil 25 is provided. Bearing 23 has a communication bore 26 for ensuring uniform pressure in all downstream portions of the valve 10.

As long as the magnetic coil 25 is not energised and no refrigerant is introduced into inlet 12, the valve element 15 is seated on the valve seat by the force of spring 24, as shown in Fig. 3.

When the refrigerant reaches a certain pressure in inlet 12, the valve element 15 is lifted in valve opening direction. The valve element 15 stops at a lifted position corresponding to an opening degree where the pressure of the refrigerant is balanced with the load of the spring 24. A predetermined differential pressure is generated between inlet 12 and outlet 13 (between the upstream and downstream pressures).

As soon as the magnetic coil 25 is energised, the moveable core 20 is attracted to the fixed core 21 and the force of the spring 24 is decreased, because the solenoid 18 operates counter to the force of the spring. The differential-pressure regulated by the differential pressure regulating valve 10 is reduced. If the value of the current is increased, the differential pressure regulated by the valve 10 is further decreased.

As long as the value of the current is zero (Fig. 4), the differential pressure regulating valve 10 is set to the maximum differential pressure. When the value of the energising current is increased the regulating differential pressure is reduced until it becomes approximately equal to zero with a maximum current value.

When the refrigerating cycle is started, or when refrigeration load on the refrigerating cycle is high due to e.g. a very high outdoor temperature, the value of the energising current is maximised to set the differential pressure regulated by the differential pressure regulating valve approximately equal to zero. The maximum cooling power of the refrigerating cycle is unleashed. Inversely, when the refrigeration load is low, the regulated differential pressure is adjusted such that the performance coefficient is increased.

Fig. 6 is a valve characteristics diagram belonging to the differential pressure regulating valve 30 of Fig. 5.

The differential pressure regulating valve 30 in Fig. 5 comprises a body 31 with an inlet 32 and an outlet 33, a valve seat 34 between inlet 32 and outlet 33, and a valve element 35 at the downstream side of valve seat 34. The valve element 35 is retained by a piston like valve urging member 36 inserted axially moveable into a cylinder in body 31. A communication bore 37 assures pressure balance.

The valve urging member 26 can be actuated by a solenoid 38 (e.g. a proportional solenoid) arranged on the body 31. The solenoid 28 includes a sleeve 39 receiving an axially moveable core 40 and a fixed core 41 at a lower end side of the sleeve 39. The sleeve 39 is closed by a cap 42. An axially moveable shaft 43 extends through and is fixed to the moveable core 40 and is slidably guided by a bearing portion formed at an end of the fixed core 41 and by a recess in the cap 42. A spring 44 of small spring force is inserted between the moveable core 40 and cap 42 for urging the valve element 35 in the valve closing direction towards the valve seat 34. A magnetic coil 45 is provided outside the sleeve 39.

As long as the magnetic coil 45 is not energised and no refrigerant is introduced into inlet 32, the valve element 35 remains seated on the valve seat 34 by the force of spring 44 (Fig. 5).

When refrigerant under a certain pressure is introduced from the condenser 2 into the inlet 32, the valve element 25 is lifted in valve opening direction to substantially fully clear the valve seat 34. With the low load of the spring 44 a small amount of differential pressure is produced. However, this differential pressure may have an amount which is substantially negligible, e.g. by using a very weak spring 44.

When the magnetic coil 45 is energised by current the moveable core 40 is attracted to the fixed core 41 and a shaft 43 urges the valve urging member 36 to actuate the valve element 35 in the valve closing direction. The solenoid 38 is operating parallel to spring 44. This decreases the valve opening degree and increases the amount of the differential pressure regulated by the valve 30. When the value of the energising current is increased, the amount of the differential pressure regulated by the valve 30 can be increased further.

When the refrigeration load on the refrigerating cycle is high, the value of the energising current is reduced to zero. The regulated differential pressure is approximately equal to zero as well, thereby unleashing the maximum cooling power. Inversely, when the refrigeration load is low the value of the energising current is adjusted to set an appropriate amount of the differential pressure such that the performance coefficient is increased accordingly.

In another refrigerating cycle shown in Fig. 7, component parts and elements similar to those appearing in Fig. 1 are designated by identical reference numbers.

The refrigerating cycle of Fig. 7 comprises an internal heat exchanger 7 in the conduit line for carrying out a heat exchange between the refrigerant flowing from the condenser 2 to the pressure reducing device 3, and refrigerant flowing from the evaporator 6 to the thermal expansion valve 5, such that the refrigerant flowing from the condenser 2 to the pressure reducing device 3 is cooled by the refrigerant flowing from the evaporator 6 to the thermal expansion valve 5, while the refrigerant flowing from the evaporator 6 to the thermal expansion 5 is heated. This allows to further enhance the refrigerating capability of the refrigerating cycle.

## Claims

1. Refrigerating cycle, particularly for automotive air-conditioners, including a compressor (1), a condenser (2), a receiver (4), an expansion device (5), and an evaporator (6), which components are connected by a conduit line in the mentioned order, wherein a settable pressure reducing device (3) is provided between said condenser (2) and said receiver (4), **characterised in that** that said pressure reducing device (3) is a differential pressure regulating valve (10; 30), and that said differential pressure regulating valve (10; 30) is an electromagnetically actuable differential pressure regulating valve capable of changing a differential pressure generated between a refrigerant inlet (12, 32) and a refrigerant outlet (13, 33) from approximately zero to a desired value or amount by an externally generated electric signal.

**2.** Refrigerating cycle as in claim 1, **characterised in that** said pressure reducing device (3) is adjustable for varying the pressure downstream of said pressure reducing device (3) in relation to the pressure upstream of said pressure reducing device (3), preferably for varying the pressure differential in at least one step or steplessly.

**3.** Refrigerating cycle as in claim, **characterised in that** said pressure reducing device (3) is equipped with an electric actuator, preferably a switching solenoid or a proportional solenoid (18, 38).

**4.** Refrigerating cycle as in at least one of claims 1 to 3, **characterised in that** said expansion device (5) is a thermal expansion valve for controlling the degree of super heat of refrigerant flowing out from said evaporator (6).

**5.** Refrigerating cycle as in claim 1, **characterised in that** said electromagnetically actuable pressure regulating valve (10; 30) comprises a valve element (15, 35) which is spring loaded by a spring (24, 44) against a valve seat (14, 34) at a downstream side of said valve seat, and that a solenoid (18; 38) of said pressure regulating valve either is electrically actuable parallel or counter to said spring force.

**6.** Refrigerating cycle as in at least one of claims 1 to 5, **characterised in that** a heat exchanger (7) is arranged in the conduit line for exchanging heat between the refrigerant flowing from the condenser (2) to the pressure reducing device (3) and the refrigerant flowing from the evaporator (6) to the thermal expansion valve.

## Patentansprüche

**1.** Kühlkreis, insbesondere für Automobil-Klimaanlagen, mit einem Kompressor (1) einem Kondensator (2), einem Speicher (4), einer Expansionsvorrichtung (5), und einem Verdampfer (6), welche Komponenten miteinander in der angegebenen Reihefolge durch eine Leitung verbunden sind, wobei zwischen dem Kondensator (2) und dem Speicher (4) eine einstellbare Druckreduziervorrichtung (3) vorgesehen ist, **dadurch gekennzeichnet, dass** die Druckreduziervorrichtung (3) ein Differentialdruck-Regelventil (10; 30) ist, und dass das Differentialdruck-Regelventil (10; 30) ein elektromagnetisch betätigbares Differentialdruck-Regelventil zum Ändern eines zwischen einem Kältemitteleinlass (12, 32) und einem Kältemittelauslass (13, 33) generierten Differentialdrucks von annähernd Null auf einen gewünschten Wert oder ein gewünschtes Ausmaß durch ein extern generiertes elektrisches Signalausgebildet ist.

**2.** Kühlkreis gemäß Anspruch 1, **dadurch gekennzeichnet, dass** die Druckreduziervorrichtung (3) einstellbar ist zum Variieren des Drucks stromab der Druckreduziervorrichtung (3) in Relation zu dem Druck stromauf der Druckreduziervorrichtung (3), vorzugsweise, zum Variieren des Druckdifferentials in zumindest einer Stufe oder stufenlos.

**3.** Kühlkreis gemäß Anspruch 1, **dadurch gekennzeichnet, dass** die Druckreduziervorrichtung (3) mit einem elektrischen Aktuator ausgestattet ist, zweckmäßig mit einem Schaltmagneten oder einem Proportionalmagneten (18, 38).

**4.** Kühlkreis gemäß zumindest einem der Ansprüche 1 bis 3, **dadurch gekennzeichnet, dass** die Expansionsvorrichtung (5) ein thermisches Expansionsventil zum Regeln des Überhitzungsgrads des aus dem Verdampfer (6) ausströmenden Kältemittels ist.

**5.** Kühlkreis gemäß Anspruch 1, **dadurch gekennzeichnet, dass** das elektromagnetisch betätigbare Druckregelventil (10; 30) ein Ventilelement (15, 35) aufweist, das durch eine Feder (24, 44) gegen einen Ventilsitz (14, 34) belastet ist und sich an einer Stromabseite des Ventilsitzes befindet, und dass ein Magnet (18; 18) des Druckregelventils entweder parallel oder entgegengesetzt zur Federkraft elektrisch betätigbar ist.

**6.** Kühlkreis gemäß wenigsten einem der Ansprüche 1 bis 5, **dadurch gekennzeichnet, dass** zum Wärmeaustausch zwischen dem Kältemittel, das von dem Kondensator (2) zu der Druckreduziervorrichtung (3) strömt, und dem Kältemittel, das von dem Verdampfer (6) zu dem thermischen Expansionsventil strömt in der Leitungsverbindung ein Wärmetauscher (7) angeordnet ist.

## Revendications

**1.** Cycle frigorifique, en particulier pour les conditionneurs d'air d'automobile, comprenant un compresseur (1), un condensateur (2), un récepteur (4), un dispositif d'expansion (5) et un évaporateur (6), lesquels composants sont raccordés par un conduit dans l'ordre mentionné, dans lequel un dispositif de réduction de pression réglable (3) est prévu entre ledit condensateur (2) et ledit récepteur (4), **caractérisé en ce que** ledit dispositif de réduction de pression (3) est une soupape de régulation de pression différentielle (10 ; 30) et **en ce que** ladite soupape de régulation de pression différentielle (10 ; 30) est une soupape de régulation de pression différentielle actionnable capable de modifier une pression différentielle générée entre une entrée de réfrigérant (12, 32) et une sortie de réfrigérant (13, 33) d'approximativement de zéro à une valeur ou quantité souhaitée par un signal électrique généré extérieurement.

**2.** Cycle frigorifique selon la revendication 1, **caractérisé en ce que** ledit dispositif de réduction de pression (3) est réglable pour modifier la pression en aval dudit dispositif de réduction de pression (3) par rapport à la pression en amont dudit dispositif de réduction de pression (3), de préférence pour modifier le différentiel de pression en au moins une étape ou sans étape.

**3.** Cycle frigorifique selon la revendication, **caractérisé en ce que** ledit dispositif de réduction de pression (3) est équipé avec un actionneur électrique, de préférence un solénoïde de commutation ou un solénoïde proportionnel (18, 38).

**4.** Cycle frigorifique selon au moins l'une des revendications 1 à 3, **caractérisé en ce que** ledit dispositif d'expansion (5) est un détendeur thermique pour contrôler le degré de super chaleur du réfrigérant qui sort en s'écoulant dudit évaporateur (6).

**5.** Cycle frigorifique selon la revendication 1, **caractérisé en ce que** ladite soupape de régulation de pression (10 ; 30) pouvant être actionnée de manière électromagnétique comprend un élément de soupape (15, 35) qui est chargé par ressort par un ressort (24, 44) contre un siège de soupape (14, 34) au niveau d'un côté en aval dudit siège de soupape et **en ce qu'**un solénoïde (18 ; 38) de ladite soupape de régulation de pression peut être actionné électriquement de manière parallèle ou opposée à ladite force du ressort.

**6.** Cycle frigorifique selon au moins l'une desdites revendications 1 à 5, **caractérisé en ce qu'**un échangeur de chaleur (7) est agencé dans le conduit pour échanger la chaleur entre le réfrigérant qui s'écoule du condensateur (2) au dispositif de réduction de pression (3) et le réfrigérant qui s'écoule de l'évaporateur (6) au détendeur thermique.

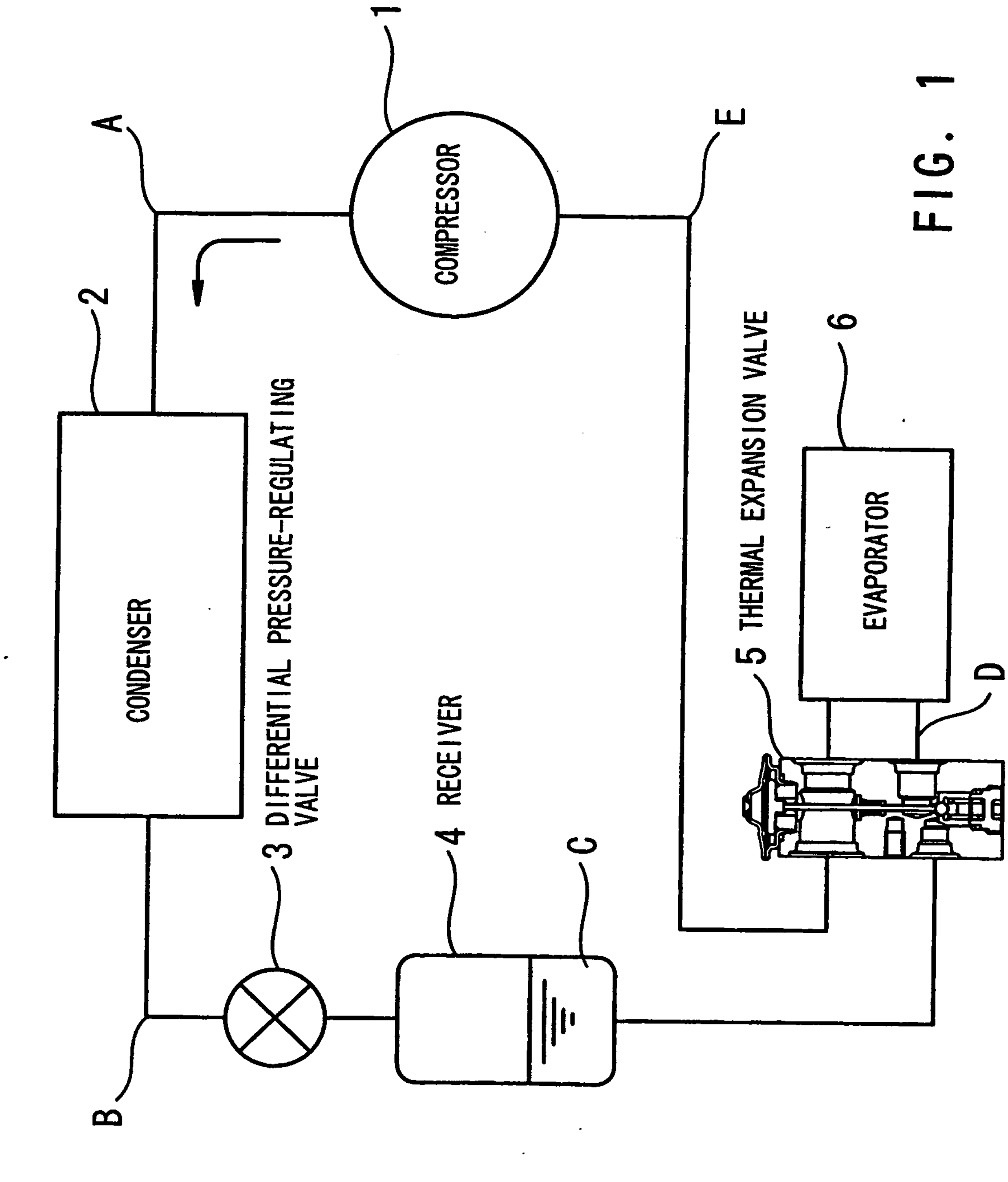
A
1
COMPRESSOR
E
2
CONDENSER
3 DIFFERENTIAL PRESSURE-REGULATING VALVE
4 RECEIVER
C
B
5 THERMAL EXPANSION VALVE
6
EVAPORATOR
D

FIG. 1

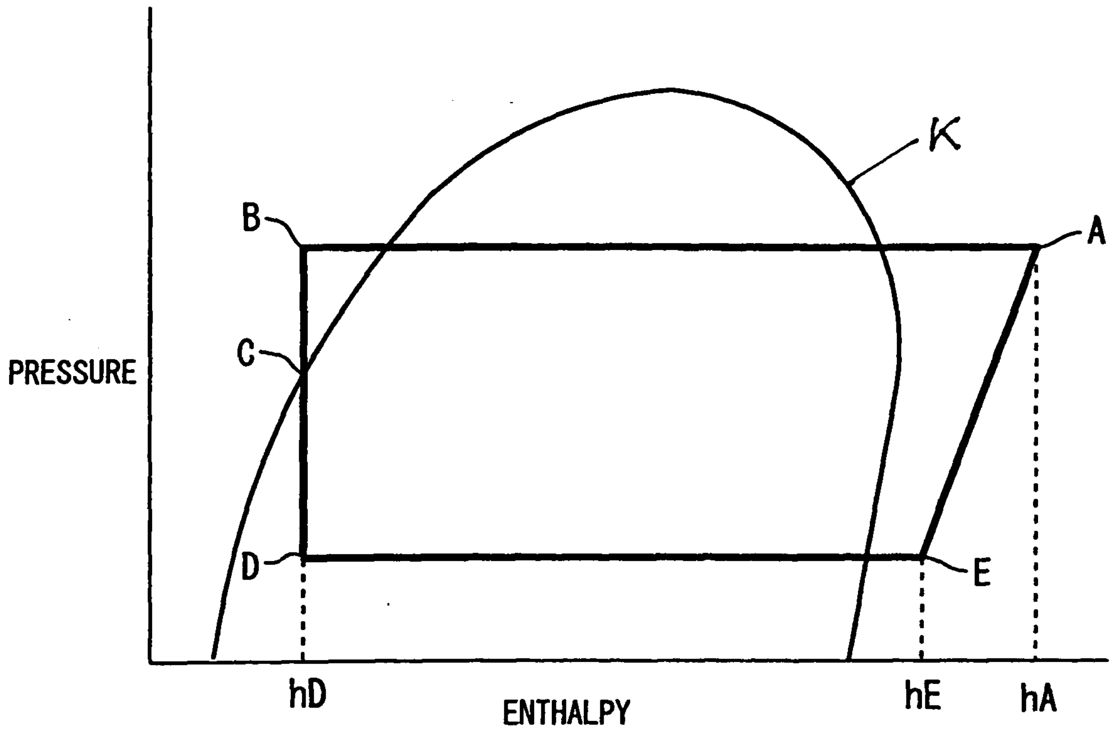


FIG. 2

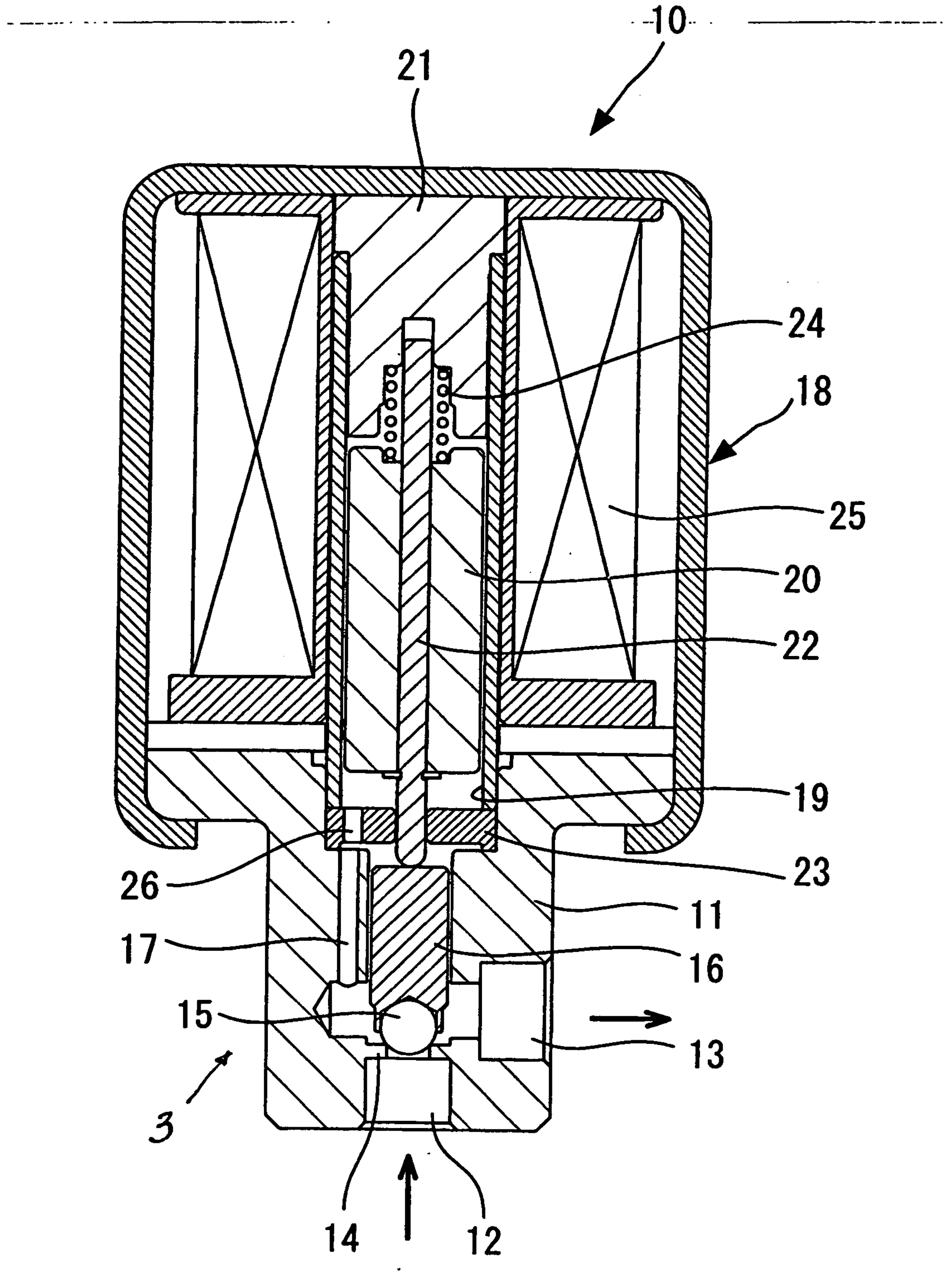


FIG. 3

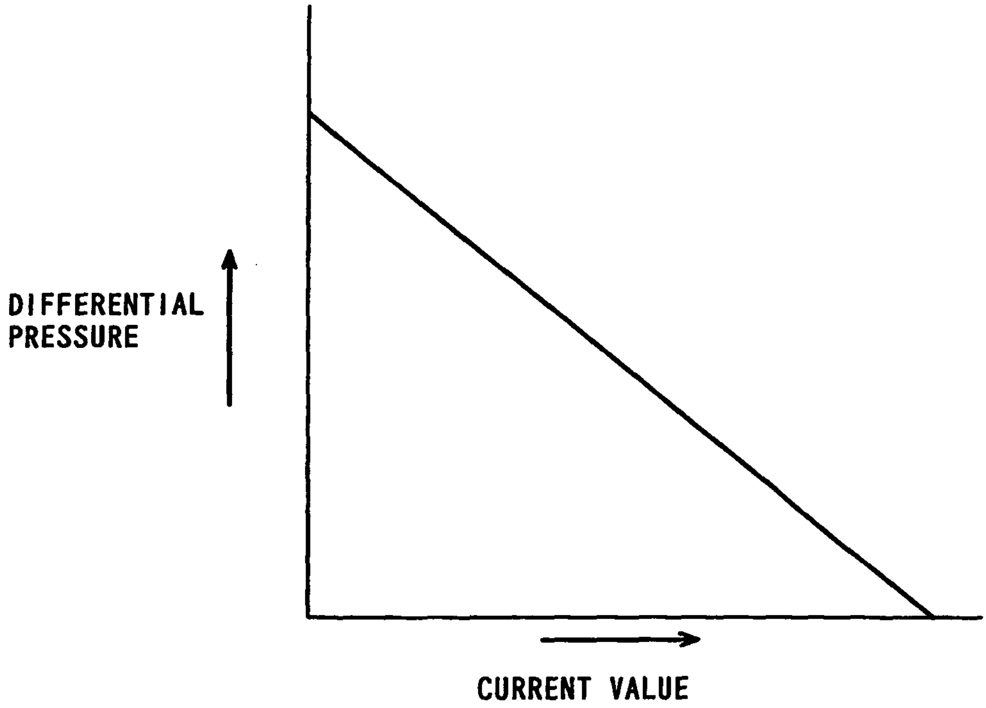


FIG. 4

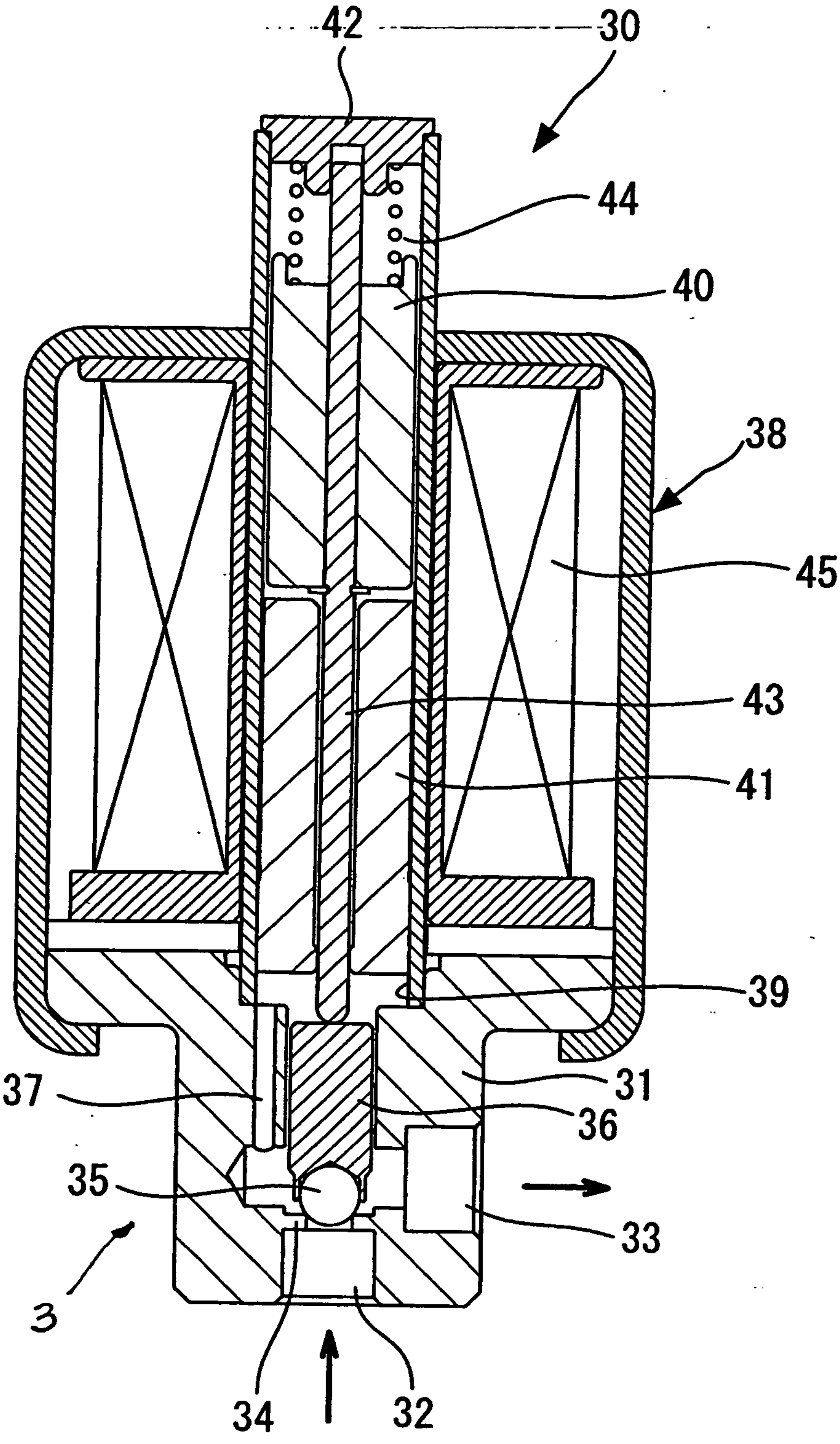


FIG. 5

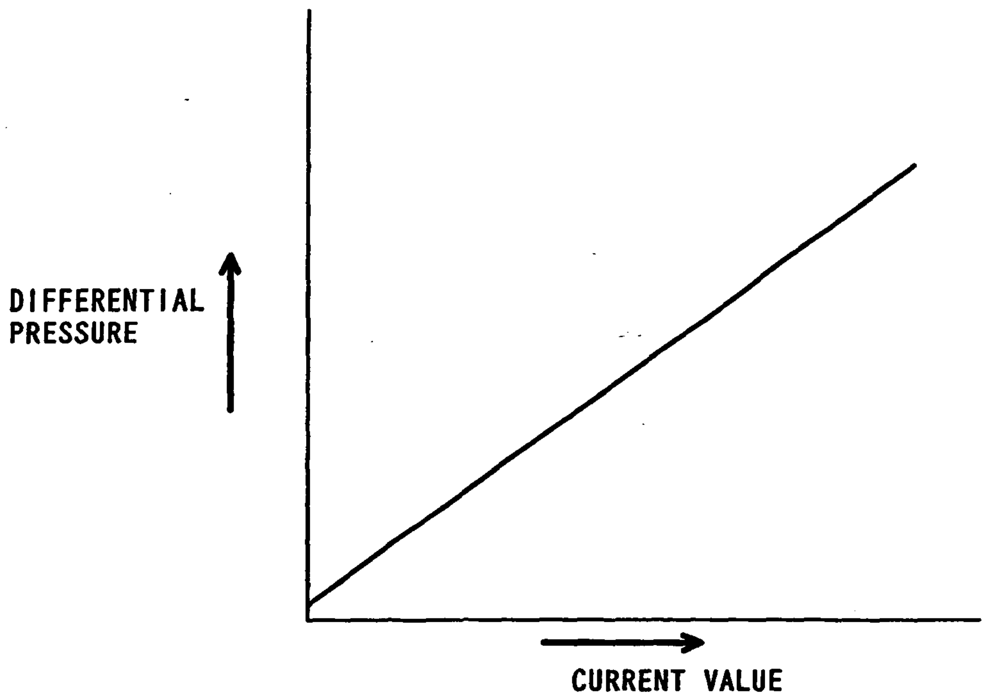


FIG. 6

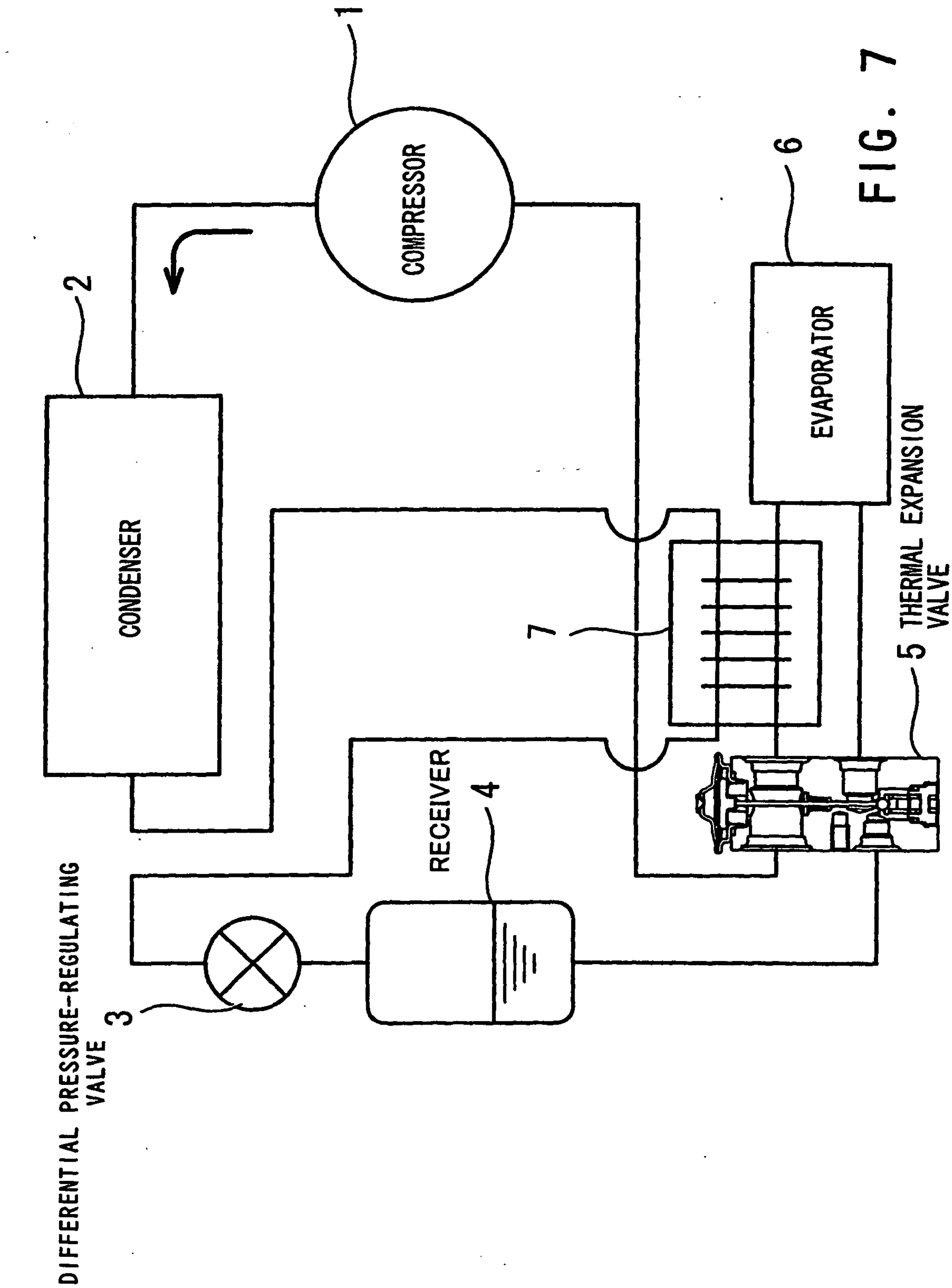
1
COMPRESSOR
2
CONDENSER
6
EVAPORATOR
7
RECEIVER
4
3
DIFFERENTIAL PRESSURE-REGULATING VALVE
5 THERMAL EXPANSION VALVE

FIG. 7